# EUROPÄISCHE PATENTSCHRIFT

(11) **EP 3 302 946 B1**
(45) Veröffentlichungstag und Bekanntmachung des Hinweises auf die Patenterteilung: **06.03.2019**
(21) Anmeldenummer: 16723130.7
(22) Anmeldetag: 18.05.2016
(51) Int. Cl.: B29C 70/46, B29C 33/52, B29C 70/54, B29C 70/30, B29C 70/18, B29D 22/00, B29L 22/00

(54) **VERFAHREN ZUR HERSTELLUNG VON SMC-HOHLBAUTEILEN**
PROCESS FOR THE PRODUCTION OF SMC HOLLOW COMPONENTS
PROCÉDÉ DE FABRICATION D'ÉLÉMENTS CREUX EN SMC

(30) Priorität: 28.05.2015 DE 102015209762
(43) Veröffentlichungstag der Anmeldung: 11.04.2018
(73) Patentinhaber: Bayerische Motoren Werke Aktiengesellschaft, 80809 München (DE)
(72) Erfinder: MIADOWITZ, Thomas, 84030 Ergolding (DE); REISS, Markus, 80804 München (DE)
(86) Internationale Anmeldenummer: PCT/EP2016/061103
(87) Internationale Veröffentlichungsnummer: WO 2016/188814

(56) Entgegenhaltungen:
- EP-A2- 0 051 108
- US-A- 5 128 192
- US-A1- 2014 102 578

## Beschreibung

Die Erfindung betrifft ein Verfahren zur Herstellung von Faserverbund-Hohlbauteilen im SMC-Verfahren. SMC steht für Sheet Molding Compound.

Das SMC-Verfahren zur Herstellung von Faserverbundbauteilen ist seit Langem bekannt. Jedoch ist es unter Anderem aufgrund des hohen Drucks im Werkzeug derzeit noch nicht möglich, SMC-Hohlbauteile herzustellen.

Neben der Herstellung von Hohlbauteilen im Hochdruck RTM-Verfahren gibt es als weitere Möglichkeit zur Herstellung von Hohlbauteile das Strangziehverfahren. Hierbei ist eine kontinuierliche Herstellung von einfachen faserverstärkten Profilen ermöglicht.

Nachteilig an den Verfahren des Stands der Technik ist, dass für den Hochdruck RTM-Prozess Kernsysteme mit hoher Druckbeständigkeit erforderlich sind. Hierfür sind beispielsweise Schaumkerne mit hoher Grammatur notwendig, damit der Injektionsdruck die Kerne nicht beschädigt. Die Kerne verbleiben nach der Herstellung im Bauteil und führen zu einem unnötig erhöhten Bauteilgewicht. Dies ist aus Sicht des angestrebten Leichtbaus unerwünscht.

Blasformkerne lassen sich nach der Bauteilherstellung wieder entfernen, besitzen jedoch nur eine begrenze Druckbeständigkeit. Die Prozessführung hierzu ist sehr aufwendig und komplex.

Das Strangziehverfahren ist bezüglich der herzustellenden Formen beschränkt. Es lassen sich nur sehr einfache geometrische Gebilde ohne Änderung des Querschnitts herstellen. Komplexe Profile mit deutlichen Umfangsänderungen können nicht gefertigt werden.

Weiterer Stand der Technik auf diesem technischen Gebiet ist zudem aus den Veröffentlichungen EP 0 051 108 A2, US 2014 102 578 A1 und US 5 128 192 A bekannt.

Der Erfindung liegt deshalb die Aufgabe zugrunde, ein Verfahren bereitzustellen, mit dem im SMC-Prozess Faserverbund-Hohlbauteile wirtschaftlich und für die automobile Großserie geeignet fertigbar sind.

Diese Aufgabe wird durch die Merkmalskombination gemäß Patentanspruch 1 gelöst.

Dabei wird erfindungsgemäß ein Verfahren mit den Merkmalen des Anspruchs 1 vorgeschlagen, bei dem ein SMC-geeignetes Faserverbundhalbzeug in einem SMC-Werkzeug über oder um ein Kernsystem angeordnet und durch das SMC-Werkzeug in eine Hohlbauform gepresst wird, wobei das Kernsystem aus einer auswaschbaren Salzbasis gebildet ist.

Der herkömmliche SMC-Prozess wird in der automobilen Großserie vor allem im Bereich von lackierbaren Teilen der Außenhaut eingesetzt und ist auch für die Erfindung entsprechend anwendbar. Es handelt sich um einen Fließpressprozess, bei dem ein vorimprägniertes flächiges Halbzeug, das aus geschnittenen Kurzfasern und einer Epoxy/Vinylester oder ungesättigte Polyestermatrix besteht, in ein Stahlwerkzeug mit einer der Bauteilkontur folgenden Tauchkante eingelegt und unter Druck und Temperatureinwirkung verpresst wird. Durch die Einwirkung der Wärmeenergie der beheizten Werkzeughälften verringert sich die Viskosität der Matrix und das Faserverbundhalbzeug wird in eine fließfähige Form überführt. In dieser Form weicht das Material dem sich durch die Annäherung von Unter- und Oberwerkzeug in der Kavität entwickelnden Druck in Form einer Dehnbewegung aus und füllt den formgebenden Hohlraum.

Durch das Kernsystem auf Salzbasis können SMC-Hohlprofile realisiert werden, da das Salz eine ausreichende Druckbeständigkeit und Hitzebeständigkeit für das SMC-Werkzeug aufweist. Das Kernsystem wird entweder im SMC-Werkzeug fixiert und das Faserverbundhalbzeug darüber gelegt, oder das Kernsystem wird vollständig umwickelt und anschließend in das SMC-Werkzeug eingebracht.

Mit einem erfindungsgemäßen Kernsystem auf Salzbasis lassen sich zudem komplexe Geometrien mit Hinterschnitt fertigen, so dass eine flexible Gestaltung der Bauteile ermöglicht wird.

Durch die einfache, schnelle und kostengünstige Entfernbarkeit des Kerns durch dessen erfindungsgemäße Auswaschung nach der Bauteilherstellung ist eine Erhöhung des Leichtbaupotentials möglich.

Aufgrund der hohen Stabilität des Kernes aus Salz wird die Komplexität der Bauteilherstellung reduziert und die Prozesssicherheit erhöht. Zudem werden die Kosten reduziert und wirtschaftliche Vorteile erreicht.

In einer Ausgestaltung des Verfahrens ist vorgesehen, dass das Kernsystem aus mindestens einem im Kernschießprozess hergestellten Salzkristall gebildet ist. Dieser Salzkristall wird im Kernschießprozess unter Drücken bis zu 800bar hergestellt. Die Drückbeständigkeit des Salzkernes wird dadurch sehr hoch und gewährleistet die Einsetzbarkeit im SMC-Werkzeug. In einer alternativen Ausführung wird der Salzkristall durch Trocknung einer Salzlauge hergestellt.

Ferner wird in einer Ausführungsform der Erfindung vorgesehen, dass das Faserverbundhalbzeug um das Kernsystem gewickelt oder gefaltet wird. Die Anzahl der Lagen ist dabei variabel anpassbar.

Erfindungsgemäß ist das Kernsystem aus mehreren Einzelkernen gebildet. Die Einzelkerne sind voneinander beabstandet im SMC-Werkzeug befestigt und werden von dem Faserverbundhalbzeug überdeckt. Hierdurch können auch langestreckte Bauteile gefertigt werden.

Das erfindungsgemäße Verfahren ist durch die Möglichkeit der vollständigen Umwicklung des Kernsystems oder dessen Überdeckung geeignet, Faserverbund-Hohlbauteile mit einseitig offener oder auch vollständig geschlossener Hohlbauform herzustellen.

In einer Weiterbildung des erfindungsgemäßen Verfahrens ist vorgesehen, dass das Kernsystem Erhöhungen und/oder Vertiefungen als Negativ aufweist, deren Formen auf das Faserverbundhalbzeug übertragen werden und im Faserverbund-Hohlbauteil als Positiv erzeugt werden. Dies ermöglicht eine hohe Designfreiheit der SMC-Bauteile als komplexe Hohlprofile. Die Bauteile können durch Aufdickungen oder Querschnittsänderungen oder Sicken oder Rippen geometrisch versteift werden. Zusätzlich oder alternativ können Anbindungspunkte mittels Inserts in das Bauteil ohne einen späteren Fügeschritt bereits im SMC-Herstellungsprozess eingebracht werden. Gerade bei der Darstellung von Knotenelementen entfällt durch die monolithische Knotenstruktur ein Fügeschritt in Form einer Verklebung zweier Schalen und somit die größte Schwachstelle in der Struktur. Das erzeugte Bauteil kann als fertiges Ganzes aus dem SMC-Werkzeug entnommen werden.

Das erfindungsgemäße Verfahren umfasst ferner die Möglichkeit, dass an dem Faserverbundhalbzeug Anbindungsgeometrien bzw. Anschraubgeometrien vorgesehen werden, die im SMC-Werkzeug mit angepresst werden. Die Anzahl der Prozessschritte für die Herstellung der SMC-Hohlbauteile wird durch die Prozessintegration reduziert. Dadurch können zusätzliche Kosten eingespart werden.

Andere vorteilhafte Weiterbildungen der Erfindung sind in den Unteransprüchen gekennzeichnet. Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht. Beispielsweise kann das Kernsystem auf verschiedene Weise im Werkzeug fixiert werden.

## Patentansprüche

1. Verfahren zur Herstellung von Faserverbund-Hohlbauteilen, wobei ein Sheet Molding Compound, SMC, geeignetes Faserverbundhalbzeug in einem SMC-Werkzeug über oder um ein Kernsystem angeordnet und durch das SMC-Werkzeug in eine Hohlbauform gepresst wird und das Kernsystem aus einer auswaschbaren Salzbasis gebildet ist, wobei
das Kernsystem aus mehreren Einzelkernen gebildet wird und
die mehreren Einzelkerne voneinander beabstandet im SMC-Werkzeug befestigt sind und von dem Faserverbundhalbzeug überdeckt werden.

2. Verfahren nach Anspruch 1, **dadurch gekennzeichnet, dass** das Kernsystem aus mindestens einem im Kernschießprozess hergestellten Salzkristall gebildet ist.

3. Verfahren nach Anspruch 1, **dadurch gekennzeichnet, dass** das Kernsystem durch Trocknung einer Salzlauge hergestellt ist.

4. Verfahren nach zumindest einem der vorigen Ansprüche, **dadurch gekennzeichnet, dass** das Faserverbundhalbzeug zumindest abschnittsweise um das Kernsystem gewickelt oder gefaltet wird.

5. Verfahren nach zumindest einem der vorigen Ansprüche, **dadurch gekennzeichnet, dass** die Faserverbund-Hohlbauteile eine einseitig offene oder geschlossene Hohlbauform aufweisen.

6. Verfahren nach zumindest einem der vorigen Ansprüche, **dadurch gekennzeichnet, dass** das Kernsystem nach dem Pressen und Aushärten des Faserverbund-Hohlbauteils ausgewaschen wird.

7. Verfahren nach zumindest einem der vorigen Ansprüche, **dadurch gekennzeichnet, dass** das Kernsystem Erhöhungen und/oder Vertiefungen als Negativ aufweist, deren Formen auf das Faserverbundhalbzeug übertragen werden und im Faserverbund-Hohlbauteil als Positiv erzeugt werden.

8. Verfahren nach zumindest einem der vorigen Ansprüche, **dadurch gekennzeichnet, dass** an dem Faserverbundhalbzeug Anbindungsgeometrien bzw. Anschraubgeometrien vorgesehen werden, die im SMC-Werkzeug mit angepresst werden.

## Claims

1. A method for producing fibre-composite hollow components, wherein a sheet moulding compound, SMC, suitable semi-finished fibre-composite product is arranged in an SMC mould over or around a core system and is pressed by the SMC mould into a hollow structural form and the core system is formed from a salt base which can be washed out, wherein the core system is formed of a plurality of individual cores and the plurality of individual cores are fastened spaced apart from each other in the SMC mould and are covered by the semi-finished fibre-composite product.

2. A method according to Claim 1, **characterised in that** the core system is formed from at least one salt crystal formed in a core shooting process.

3. A method according to Claim 1, **characterised in that** the core system is produced by drying a brine.

4. A method according to at least one of the preceding claims, **characterised in that** the semi-finished fibre-composite product is wound or folded at least in portions around the core system.

5. A method according to at least one of the preceding claims, **characterised in that** the fibre-composite hollow components have a hollow structural form which is open or closed on one side.

6. A method according to at least one of the preceding claims, **characterised in that** the core system is washed out after the pressing and curing of the fibre-composite hollow component.

7. A method according to at least one of the preceding claims, **characterised in that** the core system has elevations and/or depressions as a negative, the forms of which are transferred to the semi-finished fibre-composite product and are produced as a positive in the fibre-composite hollow component.

8. A method according to at least one of the preceding claims, **characterised in that** attachment geometries or screw-attachment geometries which are also pressed-on in the SMC mould are provided on the semi-finished fibre-composite product.

## Revendications

1. Procédé d'obtention d'éléments creux en composite de fibres selon lequel un composite de fibres semi fini pouvant constituer un mélange de feuilles - composé de moulage SMC - est positionné dans un outil de moulage SMC sur ou autour d'un système formant noyau et est comprimé par l'outil de moulage SMC selon une forme de configuration creuse, et le système formant noyau est formé d'une base saline pouvant être éliminée par lavage, procédé selon lequel :
le système formant noyau est constitué de plusieurs noyaux individuels, et
les noyaux individuels sont fixés à distance les uns des autres dans l'outil de moulage SMC et sont recouverts par le composite en fibres semi fini.

2. Procédé conforme à la revendication 1,
**caractérisé en ce que**
le système formant noyau est constitué par au moins un cristal de sel obtenu par un procédé de soufflage de noyau.

3. Procédé conforme à la revendication 1,
**caractérisé en ce que**
le système formant noyau est obtenu par séchage d'une solution saline.

4. Procédé conforme à au moins l'une des revendications précédentes,
**caractérisé en ce que**
le composite de fibres semi fini est enroulé ou replié au moins par segment autour du système formant noyau.

5. Procédé conforme à au moins l'une des revendications précédentes,
**caractérisé en ce que**
les éléments creux en composite de fibres ont une configuration creuse ouverte d'un côté ou fermée.

6. Procédé conforme à au moins l'une des revendications précédentes,
**caractérisé en ce que**
le système formant noyau est éliminé par lavage après la compression et le durcissement de l'élément creux en composite de fibres.

7. Procédé conforme à au moins l'une des revendications précédentes,
**caractérisé en ce que**
le système formant noyau comporte en tant que négatif des bossages et/ou des renfoncements dont les formes sont transférées sur le composite de fibres semi fini et sont obtenues dans l'élément creux en composite de fibres sous forme positive.

8. Procédé conforme à au moins l'une des revendications précédentes,
**caractérisé en ce qu'**
il est prévu sur le composite de fibres semi fini des géométries de liaison et/ou des géométries de vissage qui sont comprimées conjointement dans l'outil de moulage SMC.
